Europäisches Patentamt

European Patent Office

Office européen des brevets

(11) Publication number: **0 076 142**
**B1**

(12) **EUROPEAN PATENT SPECIFICATION**

(45) Date of publication of patent specification: **16.09.87**

(51) Int. Cl.⁴: **G 11 B 5/84**

(21) Application number: **82305103.2**

(22) Date of filing: **28.09.82**

(54) **Post treatment of perpendicular magnetic recording media.**

(30) Priority: **28.09.81 US 306125**
**28.09.81 US 306126**

(43) Date of publication of application:
**06.04.83 Bulletin 83/14**

(45) Publication of the grant of the patent:
**16.09.87 Bulletin 87/38**

(84) Designated Contracting States:
**DE FR GB IT NL**

(56) References cited:
**AT-B- 365 356**
**DE-A-2 309 594**
**US-A-4 239 835**

**FUNKSCHAU 1975, Heft 15/422,**
**"Hochdisperses Ersin für Magnetbänder"**

(73) Proprietor: **XEROX CORPORATION**
**Xerox Square - 020**
**Rochester New York 14644 (US)**

(72) Inventor: **Chen, Tu**
**13254 Paramount Drive**
**Saratoga California (US)**
Inventor: **Cavallotti, Pietro L.**
**14 Piazza Piola**
**I-20131 Milano (IT)**

(74) Representative: **Weatherald, Keith Baynes et al**
**European Patent Attorney Rank Xerox Limited**
**Patent Department 338 Euston Road**
**London NW1 3BH (GB)**

Courier Press, Leamington Spa, England.

# 0 076 142

**Description**

This invention relates to a magnetic recording medium and methods of post treatment of the magnetic layer of such a medium after initial fabrication to improve its perpendicular magnetization for high density recording of signals.

In the technology of conventional magnetic recording using tape, sheet or disk recorders in video, audio or other digitized information storage, the signals are recorded on a magnetic recording layer formed on a non-magnetic base by magnetizing the layer in the plane of the film in a longitudinal direction, which direction is parallel to the direction of relative movement of the medium to the recording transducer or head. This has been referred to as the longitudinal magnetization mode. In a recording process, the information (or bit) to be stored is recorded by changing the state or direction of the magnetization, i.e. a bit of information is created by reversing the magnetization direction of the magnetic medium or creating a flux reversal. When recording in the longitudinal magnetization mode, a strong demagnetising field is created between oppositely magnetized areas on the medium. The existence of this demagnetising field in the longitudinal magnetization recording mode causes attenuation and rotation of the residual magnetization, with the result that an attenuated output is obtained in reproduction of the recorded signal. This attenuation and signal deterioration is accentuated as the linear packing density is increased or the wavelength of recorded signals is decreased in the direction of longitudinal magnetization. The consequence is a limitation on the maximum recording density in the longitudinal magnetization mode.

If the magnetic layer can support principally a magnetization normal to the film plane, then, if signals are recorded by reversing the magnetization direction in the direction normal to the surface of the magnetic layer following the pattern of the signal (i.e. recording in the so-called perpendicular magnetization mode), decreasing the wavelength of the recorded signal, as by increasing the recording density, causes a reduction in the demagnetizing field. Therefore, will be appreciated that, for an increase in the density of information to be stored in a given area of the magnetic recording medium, recording in the perpendicular magnetization mode (hereinafter referred to as perpendicular recording) is more advantageous than the conventional recording using longitudinal magnetization mode (hereinafter referred to as longitudinal recording).

US—A—4 239 835 discloses a magnetic record medium having a thin film of ferromagnetic material having a columnar crystal structure inclined at an acute angle to a normal to the film surface. The crystals are formed by vacuum deposition, during which process they become coated with an oxide layer. There is no mention of the resultant medium being suitable for perpendicular recording, or of the desired improvement in coercivity being brought by any means other than coating the canted crystals with an oxidised layer of ferromagnetic material although it does relate the improvement in coercivity to the chemical oxidation states of the crystal grain boundaries.

In order to overcome the problems associated with the existing proposed methods of producing a magnetic recording medium for perpendicular recording, the present invention provides a method to produce such a magnetic recording medium having a highly oriented easy axis of magnetization perpendicular to film plane and which can be fabricated at an extremely low cost, rendering it highly adaptive to and competitive for a multitude of perpendicular recording applications.

According to this invention, the method of this invention relates to treatment of a continuous thin film magnetic medium comprising a substrate upon which is deposited a thin magnetic layer comprising acicular shaped crystalline magnetic particles, with the crystallographic "c" axis of the crystal in each particle oriented parallel to the longitudinal axis of the particle acicula and the longitudinal axis of the acicular particles oriented substantially normal to the plane of said magnetic layer. The treatment method increases the separation between magnetic particles of the film and thereby increases their coercivity, $H_c$, while decreasing their demagnetization field, $H_d$. The method comprises the step of utilizing enhanced grain boundary reaction at the intergranular boundary of said particles to achieve particle separation effectively either by diffusing the magnetic layer with a reagent or etching the magnetic layer with an etching agent.

According to the invention, various kinds of treatment of thin magnetic films or layers, such as, Co or Co ally based thin magnetic films, can improve the magnetization properties of the thin films by providing large intergranular separation between the perpendicular particles of the magnetic layer and further · enhance the perpendicular magnetization hysteretic properties of a perpendicular recording medium. The treatments are not limited to the particular method of fabrication discussed herein but are applicable to other perpendicular recording media fabricated by other methods, such as sputtering or vacuum deposition, as long as the resultant film has the above mentioned perpendicular anisotropic properties.

The present invention will now be described by way of example with reference to the accompanying drawings, in which:—

Figure 1 is a schematic illustration of the side elevational view of the medium of this invention illustrating the acicular shaped microcrystals and the crystal orientation of the particles with the easy axis of magnetization perpendicular to the surface of the layer;

Figure 2 is a graphic illustration of an idealized perpendicular and in-plane M-H loops, including the demagnetising field;

Figure 3 is a graphic illustration of an experimental perpendicular M—H loop, including the

2

demagnetising field and the intrinsic M—H loop after the demagnetising field was removed from the experimental M—H loop;

Figures 4A and 4B are both graphic illustrations of the M—H loop, including the demagnetising field, for practical recording media having desired perpendicular anisotropy;

Figure 5 is a schematic side view illustration of the electroplating apparatus used for producing perpendicular Co-based magnetic recording media in accordance with this invention;

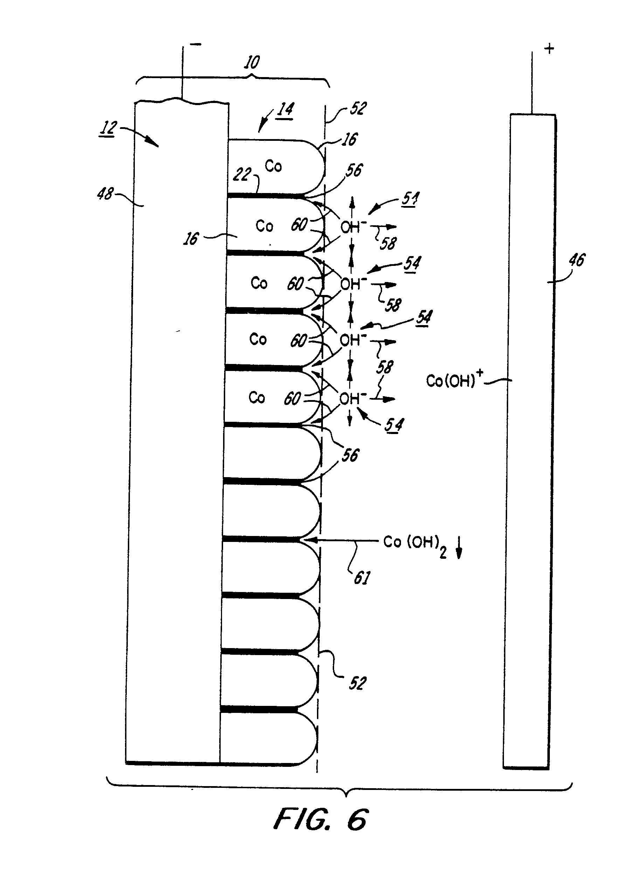

Figure 6 is a detail illustration of mechanism of cellular growth to form columnar structures in the electroplating method comprising this invention;

Figure 7 is a schematic illustration of the microstructure of a magnetic field after being subjected to an enhanced grain boundary diffusion treatment to enlarge the intergranular separation between the magnetic particles;

Figure 8 is a schematic illustration of the microstructure of a magnetic film after being subjected to an enhanced grain boundary etching treatment to enlarge the intergranular separation between the magnetic particles;

Figures 9A, 9B, 9C and 9D show the M—H hysteresis loops taken with applied magnetic field parallel (II) and perpendicular ($_\perp$) to the film plane of the four magnetic film samples of Example 6, these samples having previously received treatment by hydrogen diffusion in a cathodization process;

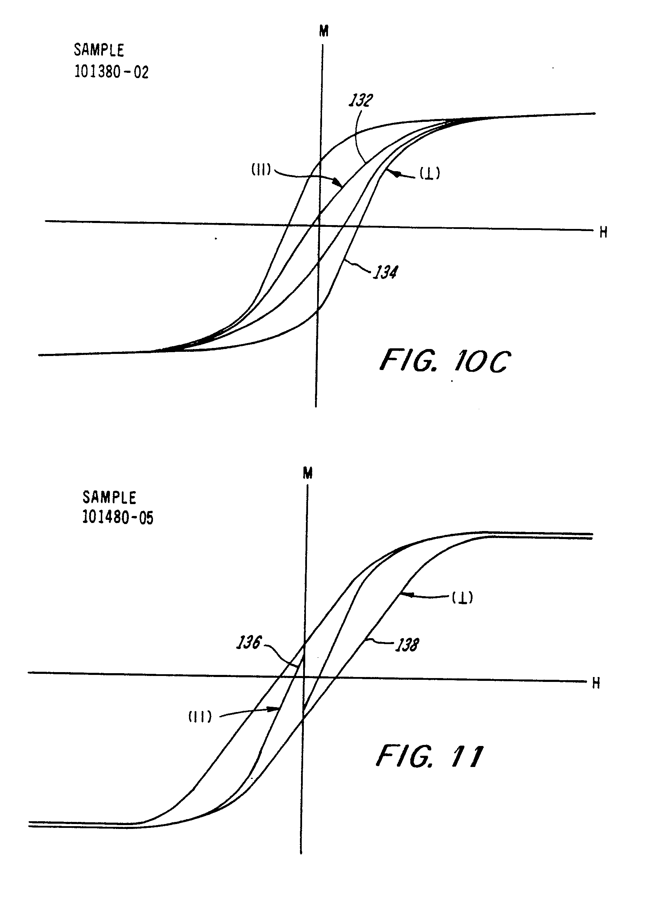

Figures 10A, 10B and 10C show the M—H hysteresis loops taken with applied magnetic field parallel (II) and perpendicular ($_\perp$) to the film plane of the three magnetic film samples of Example 7, these samples having previously received treatment by enhanced grain boundary etching using an anodization process;

Figure 11 shows the M—H hysteresis loops taken with applied magnetic field parallel and perpendicular ($_\perp$) to the film plane for the magnetic film sample of Example 8 after treatment by simple chemical etching, and

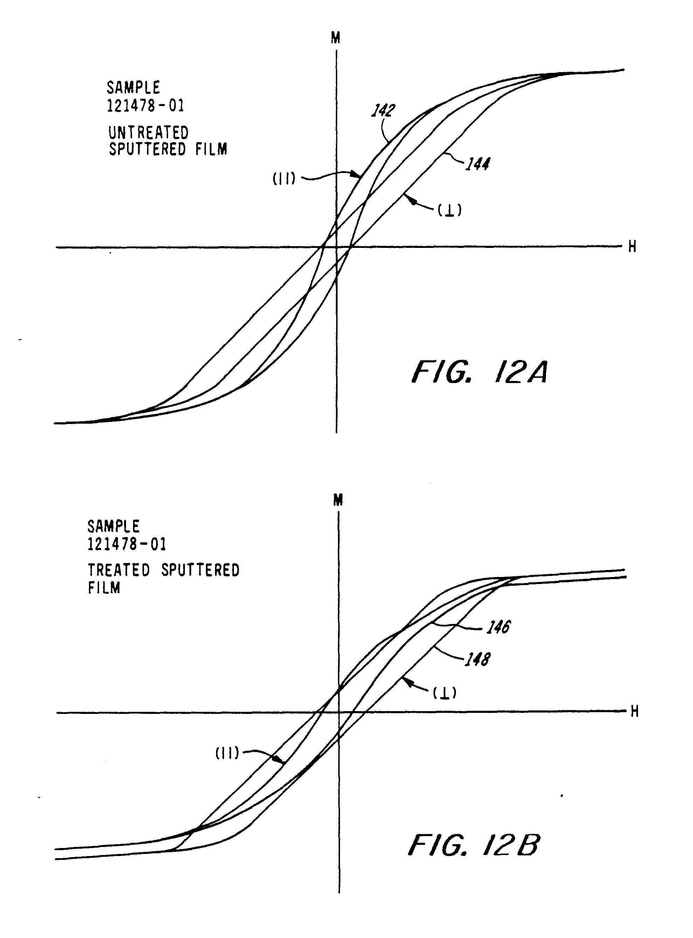

Figures 12A and 12B show the M—H hystersis loops taken with applied magnetic field perpendicular ($_\perp$) to the film plane for the magnetic film sample of Example 9 for, respectively, before and after treatment by oxidation, illustrating the enhanced grain boundary diffusion mechanism for sputtered films.

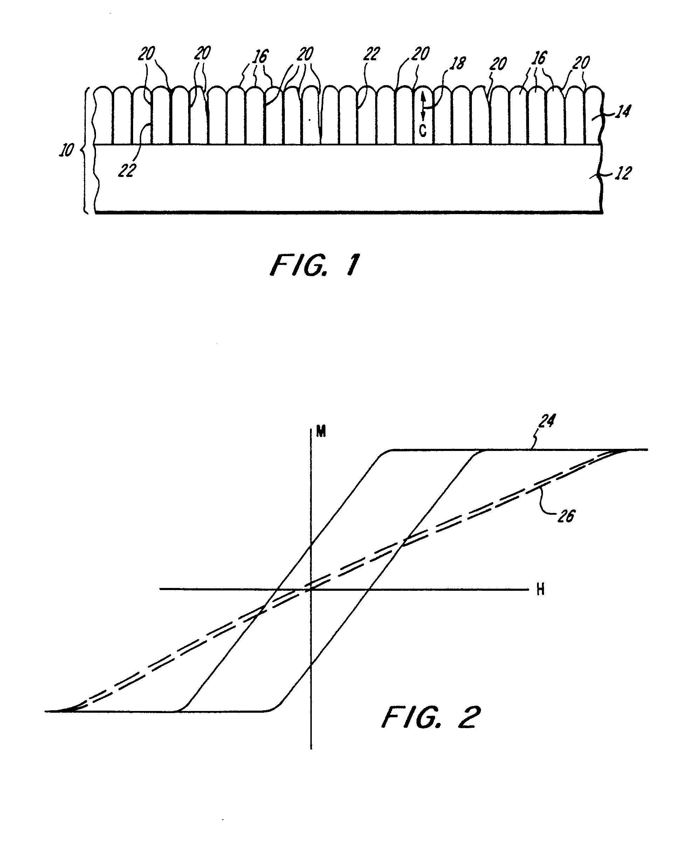

Figure 1 illustrates a magnetic recording medium 10 comprising this invention. This illustration is materially enlarged for purposes of better understanding the microstructure and properties of the magnetic recording layer 14. Layer or film 14 is deposited on the conductive support 12 by any suitable process, such as electrochemical plating. The conditions of the plating process should be selected such that the microstructure of the resulting magnetic film 14 will result in a multitude of substantially uniform acicular or columnar shaped crystallites or particles 16, with both the longitudinal axes of the acicles and the crystallographic "c" axis 18 of the particles 16 oriented perpendicular to the plane of the film.

The crystalline materials comprising the film 14 under discussion herein and the later examples are HCP Co or Co based alloy particles. Examples of Co based alloys are CoRe, CoCr and CoNi.

The film particles 16 are physically separated by impurities or voids 20 which exist in the grain boundary 22 between particles. If the medium consists of isolated acicular particles 16 having both the preferred oriented columnar shape and the crystal anistropy shown in Figure 1, the magnetic layer or film 14 will have strong uniaxial anisotropy with the easy axis of magnetization normal to the film plane, which renders the film highly suitable for perpendicular recording. By "preferred anisotropy" is meant that the particles 16 have their crystal "c" axis 18 orientation substantially along the longitudinal axis of each acicular particle as well as the longitudinal axis of each acicular particle 16 aligned normal (substantially perpendicular) to the plane of the film 14.

Figure 2 illustrates the ideal magnetic hysteresis loop representing the relation between the applied magnetic field, H, and magnetization, M, of the recording layer, as measured by a vibrating sample magnetometer over a large area of a film. Hysteresis loop 24 in solid line represents the ideal hysteresis characteristic for the perpendicular ($_\perp$) magnetization direction when the magnetic film has a uniaxial anisotropy normal to the film plane and hysteresis loop 26 is dotted line represents the ideal hysteresis characteristic for the longitudinal (II) magnetization direction of the same film. The ideal perpendicular hysteresis loop 24 of the bulk film would be a parallelogram, i.e., slanted from a rectangle because of the demagnetizing field ($H_d$) effect along the direction opposed to the easy magnetizing direction.

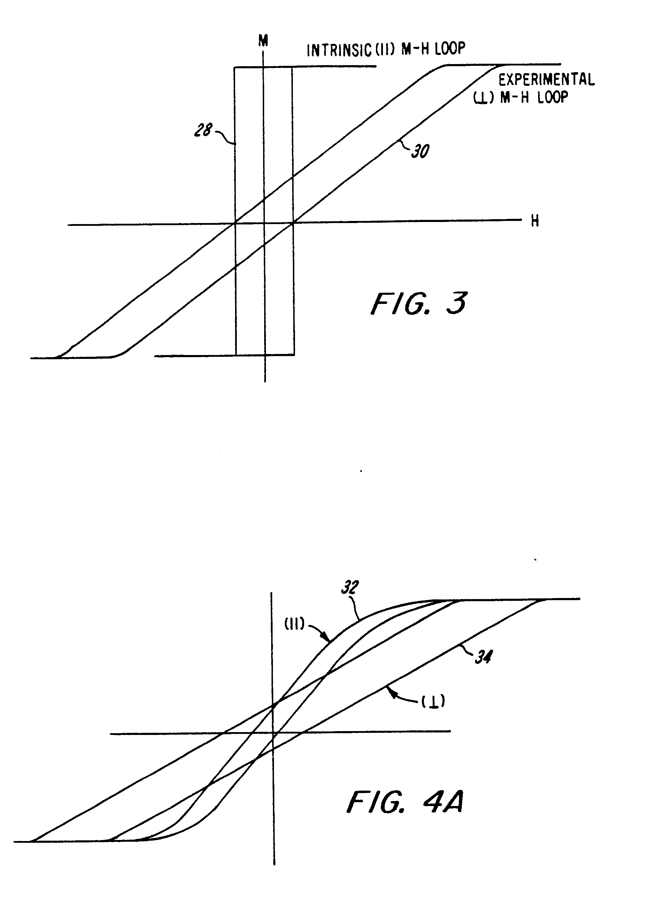

If one considered only an individual magnetic particle without the demagnetizing field effect from the bulk of the film, the intrinsic hystersis loop of the particle for a high uniaxial anisotropic film should be of rectangular shape without any slanting, as illustrated by the hysteresis loop 28 in Figure 3. For a high density recording or short wavelength, $\lambda$, recording, the linear distance between reversed magnetization regions becomes quie small and hence the demagnetizing field, $H_d$, within a single magnetized bit area reduces or approaches zero with shortening wavelength. Consequently, the magnetic hysteresis loop of such a magnetized area under high density recording will behave as an intrinsic loop 28 illustrated in Figure 3. The remanence, $M_r$, of the magnetized area will approach the value of the saturation magnetization, $M_s$, of the magnetized area. It is this physical fact of correlating the magnetic hysteresis loop of the bulk film to the intrinsic loop of the magnetized bit area that impels the search for obtaining a better perpendicular recording medium by determining whether the perpendicular hysteresis loop of the bulk film, as measured from a vibrating sample magnetometer, results in a good parallelogram shaped hysteresis loop 30 of Figure 3, which is similar shape to that represented by loop 24 of Figure 2.

Basically, the slanting of the hysteresis loop 30 of the bulk film or long wavelength recording area from the rectangular intrinsic loop 28, is caused by the demagnetizing field, $H_d$. In principle, the extent of the demagnetizing field, $H_d$, can be reduced by either decreasing the magnetization, $M_s$, of the medium by means of doping with an alloy element, such as Cr or Re, or by increasing the separation between the particles 16, i.e., increasing the magnitude of the grain boundary 22. In the case of reducing demagnetizing field, $H_d$, by doping of alloy element, the extent of the slanting cannot necessarily be reduced, whereas reducing the demagnetizing field, $H_d$, would decrease the extent of slanting drastically.

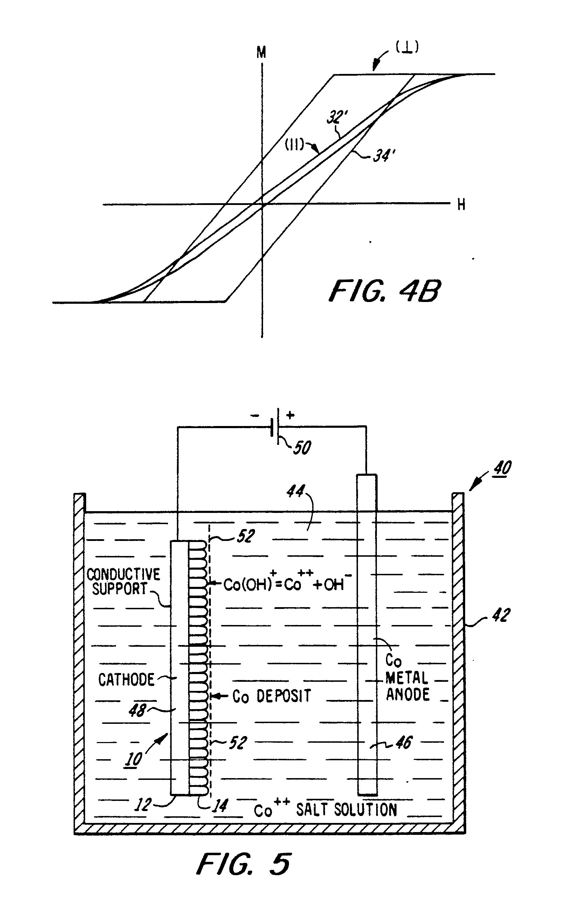

In general, for a practical and useful film having good perpendicular anisotropy but accompanied with a strong demagnetizing field, $H_d$, in the perpendicular direction, perpendicular magnetization hysteresis loops as measured from the bulk film, in practice, would show some inclination and the parallel loop would show some residual magnetism. A typical example of these parallel (II) and perpendicular ($\perp$) magnetization hysteresis loops are respectively illustrated in Figure 4A as loops 32 and 34. The amount of the inclination and the relative inclination between the two loops is related to the strength of demagnetizing field, $H_d$, in the film. If the demagnetizing field in the perpendicular direction is reduced by increasing its interparticle separation of the magnetic particles, then the perpendicular hysteresis loop 34 would decrease in inclination, as well as increasing in coercivity, $H_c$, whereas the parallel hysteresis loop 32 would increase in inclination. The resultant relative position and shape of these parallel (II) and perpendicular ($\perp$) hysteresis loops would be changed, for example, to look like the hysteresis loops 32' and 34' illustrated in Figure 4B.

The decrease in the inclination and the increase in $H_c$ of the perpendicular loop 34 would imply that the medium could support a longer wavelength recording without causing self-demagnetization of magnetized areas, thereby increasing the reliability and accuracy of recorded bit information.

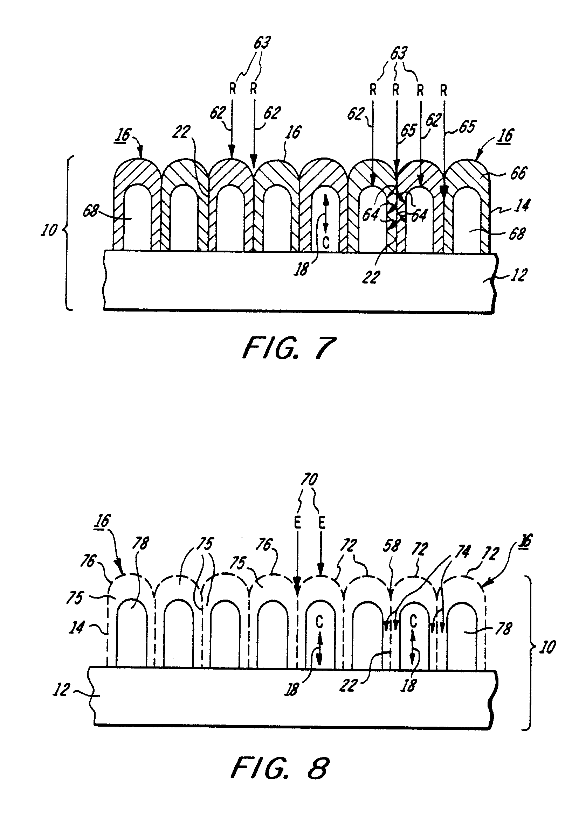

In order to reduce the demagnetising field, $H_d$, relative to each magnetic particle by increasing the separation between the acicular-shaped articles, a post-electroplating treatment may be employed to enhance the size of the grain boundary 22 between the particles. Several such treatments are possible. These treatments are based on the principles of enhanced grain boundary diffusion and enhanced grain boundary etching. These treatments are explained in conjunction with the schematic illustrations of Figures 7 and 8.

Figure 7 illustrates the change in particle microstructure during the enhanced grain boundary diffusion treatment of the electroplated film 14. A magnetic film 14 electroplated on the surface of the substrate 12 is placed in an environment comprising a reactant, R, and identified at 63. The reactant may be a gas, such as, hydrogen, oxygen, nitrogen or other diffusion agent or the vapor phase of an element that is dissimilar to the film material. If the kinetics for diffusion of the reactant 63 are sufficiently high, then the reactant 63 would undergo a solid state diffusion into the particle 16 of the film 14. This diffusion is either through the exposed surface of the particle and directly into the particle bulk, as indicated by the arrows 62, or initially through the grain boundary 22 and then into the particle bulk, as indicated by the arrow 64. As the reactant 63 diffuses into the Co or Co-based alloy particles 16, it forms a nonmagnetic phase compound or solid solution, identified as region 66, with the Co or Co alloy around the exterior regions of each particle, leaving the nondisturbed magnetic particle or core portion 68.

The diffusion of a second species into the particle will be more than one order of magnitude faster along the grain boundary 22 *via* path 65 than directly into the bulk of the particle *via* path 62 or transversely into the particle side walls *via* paths 64. Therefore, the enhanced grain boundary diffusion treatment will create a layer of nonmagnetic phase around each particle 16, illustrated by shaded region 66 of Figure 7. Consequently, the untouched magnetic material in the core portion 68 of each particle which has not been exposed to the diffusion treatment will retain its original magnetic moment and acicular shape. The effective magnetic separation between adjacent magnetic core portions 68 of the particles 16 will be increased because of the formation of the nonmagnetic phase portion 66 in the region between the particle core portion 68. This increase in the separation between the original magnetic particles 16 will result in a reduction of the demagnetising field, $H_d$, of each particle and a corresponding increase in its coercivity.

In one of these enhanced grain boundary diffusion treatments, an oxidation treatment at elevated temperature can be employed. There are several advantages in employing this type of oxidation as a film treatment. First, the heat treatment of the particles will subject them to an annealing effect. As a result, improved HCP Co alloy particles can, in principal, be achieved because of reduction in crystal strain and/or stacking faults in the particles. Secondly, the annealing effect would also increase the crystalline anisotropy. Third, the formation of the intergranular oxide along the grain boundaries and grain front of the particles provides a harder and more stable film, increasing its archival properties.

Another treatment for increasing the effective separation between the magnetic particles 16 is by employing enhanced grain boundary etching of the plated film 14 which is schematically illustrated in Figure 8.

If polycrystalline materials, such as particles 16, are subjected to etching by a conventional chemical or electrochemical process with a properly selected chemical reagent, the rate of removal of total material is faster along the grain boundary 22 than at the regions on the surface of the particles 16, i.e., the region of terminated particle growth at interface 52 in immediate contact with the etching reagent. When an electroplated film 14 on an accompanying substrate 12 is placed in a chemical or electrochemical etching solution comprising an etching reagent, E, identified at 70 in Figure 8, the reagent 70 immediately attacks the particle 16 at the grain front 72 at the surface of the particle as well as along grain boundary 22. In a film 14 comprising crystallographic "c" axis preferred oriented particles, the rate of removal of the magnetic material along the grain boundary 22 and in the vicinity or regions 74 of the grain boundary 22 would be greater than the grain front 72. This is because (1) the grain boundary 22 possesses higher free energy and, consequently, tends toward a greater rate of etching than the grain section proper of the particles and (2) the grain boundary 22 of the electroplated film includes inclusions, such as, $Co(OH)_2$, which are highly soluble in the acid solution and, hence, open up the grain boundary regions for the attending etchant.

Consequently, the particle material 75, indicated by the dotted boundary portions 76, is removed from the particles 16, leaving a core portion 78 of each particle intact if the etching process is stopped at a proper time. The core portions 78 of the particles will retain their original magnetic moment and acicular shape but have a larger interparticle separation as is evident from Figure 8. The effective magnetic separation between adjacent magnetic core portions 78 of the particles 16 will be increased because of the removal of the portions 75 in the regions surrounding the particles. This increase in the separation between the magnetic particles will result in a reduction of the demagnetising field, $H_d$, of each particle.

It should be noted that particle separation may be further extended by a combination of either intergranular diffusion or oxidation and chemical etching.

It should be pointed out that the treatments for electroplated films we propose here for the reduction of demagnetizing field of the particles by the enhanced grain boundary diffusion or enhanced grain boundary etching can also be applied to magnetic films initially prepared by other methods of fabrication, such as, for example, sputtered CoCr or CoRe alloy films or vacuum deposited magnetic alloy films, as long as the microstructure of the particles in the film exhibit columnar or acicular shaped structures with the longitudinal axis of the columnar or acicular particles and the "c" axis of the HCP particle crystal comprising the particles are oriented normal to the plane of the film.

Whatever process is used to make it, the magnetic record medium subjected to the further treatment method of this invention is as shown in Figure 1, i.e. with magnetic acicles perpendicular to the surface of the film, and with the crystallographic 'c' axis virtually collinear with the longitudinal axis of each acicle.

Example 1

This example relates to electroplated Co films followed by enhanced grain boundary reaction. The treatment is an enhanced grain boundary diffusion accomplished by an electrochemical cathodic treatment of the magnetic film.

Cathodic treatment comprises the employment of an acid solution of 0.1 mole/liter of thiorea and 30 cc/liter of $H_2SO_4$ (concentrated). Upon the application of an applied voltage between the Co sample as cathode 48 and the anode 46, hydrogen generated by cathodic action of the solution will diffuse into the film. The rate of diffusion of hydrogen will be faster along the grain boundary 22 of the film 14 than into the crystallite bulk, particularly at the grain front 52. Consequently, the spacing between the acicular crystallites will be occupied by a nonmagnetic Co—H compound or alloy thereby increasing the separation between the crystallites while decreasing the demagnetising field, $H_d$.

The current densities, treatment time and bath temperatures in the cathodic treatment for four samples are given in Table I.

TABLE I

| Co sample number | Current density | Total treatment time (w/i 1 min) | Bath temperature |
|---|---|---|---|
| 100180-01 | 0 | 0 | 25°C |
| 100380-05 | 4.5 mA/cm² | 4 min | 25°C |
| 100680-05 | 4.5 mA/cm² | 8 min | 25°C |
| 100680-04 | 10 mA/cm² | 8 min | 25°C |

Figures 17A, B, C and D show the perpendicular and parallel magnetic hysteresis loops for these four film samples, respectively. The hysteresis loop traces for comparison of sample 100380-04 in the case where no treatment is applied (parallel (II) and perpendicular ($\perp$) loops 102 and 104 in Figure 17(A) and of samples 100380-05, 100680-05 and 100680-04 in the cases where treatment is applied [parallel(II) and perpendicular ($\perp$) loops 106 and 108 in Figure 17B, parallel (II) and perpendicular ($\perp$) loops 114 and 116 in Figure 17C and parallel (II) and perpendicular ($\perp$) loops 118 and 120 in Figure 17D], a slight increase in coercivity $H_c$, and a large decrease in demagnetizing field $H_d$ as indicated by extensive decrease in inclination of the perpendicular hysteresis loops 108, 116 and 118 in Figures 17B, C, D. Thus, the enhanced grain boundary diffusion by hydrogen cathodization effectively increases the intergranular separation while decreasing the demagnetising field and, hence increasing the $M_r/M_s$ ratio as well as increasing the coercivity, $H_c$.

Cathodic treatment of other samples plated at higher current densities, for example, from above 20 mA/cm² to 100 mA/cm², revealed that the effectiveness of this treatment to provide intergranular crystallite

5

separation was not as effective as in the case of sample plated at lower current densities, e.g., below 20 to 30 mA/cm², because of the existence of nonpreferred oriented particles in the film.

Example 2

This example relates to electroplated Co films followed by another kind of enhanced grain boundary reaction. The treatment is an enhanced grain boundary etching accomplished by an anodizing treatment of the magnetic film.

Three electroplated Co film samples with preferred orientation produced from the above bath were then secured on the anode 46 of the apparatus 40. An acid bath comprising a solution of 0.1 mole/liter of thiourea and 30 cc/liter of concentrated $H_2SO_4$ is employed in the tank 42. In this arrangement, the material would preferentially etch away along the intergranular boundary 22 between the acicular particles under applied electrical current and thereby effectively increase the crystallite separation. Consequently the demagnetization field of the film will be decreased, $M_r/M_s$ ratio will be increased and $H_c$ will be increased.

The current densities, anodizing time and bath temperature for three samples are given in Table II.

TABLE II

| Co sample number | Current density | Total treatment time (w/i 1 min) | Bath temperature |
|---|---|---|---|
| 101380-01 | 2.5 mA/cm² | 2 min | 24°C |
| 101380-03 | 2.5 mA/cm² | 5 min | 24°C |
| 101380-02 | 2.5 mA/cm² | 8 min | 24°C |

Figures 18A, B, and C show the parallel (II) and perpendicular ($\perp$) magnetic hysteresis loops 122 and 124, 126 and 128, and 132 and 134, respectively, for these three film samples.

It shoud be noted that anodization effectively reduces the demagnetising field, $H_d$, as indicated by the decrease in inclination of perpendicular ($\perp$) hysteresis loops 124, 128 and 134 in comparison with the perpendicular ($\perp$) hysteresis loop 104 of the untreated film of Figure 17A and, hence, increase the ratio of $M_r/M_s$ and increase the coercivity $H_c$, of the magnetic Co film by electrochemically etching away and material between the crystallites, which effectively increases their separation.

This anodizing treatment and the cathodic treatment of Example 1 demonstrate that by using the technique of enhanced grain boundary etching under electrochemical method, the separation between the acicular crystallites can effectively increase and, hence, reduce the demagnetising effect as well as increase the values for $H_c$ and $M_r$. Therefore, one can use these treatment techniques to tailor a film for particular hysteresis properties desired for specific perpendicular recording applications.

Example 3

This example relates to electroplated Co films followed by still another kind of treatment. The treatment is an enhanced grain boundary etching accomplished by a chemical etching treatment of the magnetic film in an acid bath.

An etchant bath was prepared in an etching tank comprising concentrated $H_2SO_4$ solution of 0.1 mole/liter. The film sample was placed in the acid bath and material was preferentially etched away along the grain boundary 22 at a faster rate than the bulk of the acicular crystallite. This resulted in increased intercrystallic separation. Table III shows the etching treatment time and bath temperature for the sample.

TABLE III

| Co sample number | Total treatment time (w/i 1 min) | Bath temperature |
|---|---|---|
| 101480-05 | 8 min | 24°C |

An examination of the parallel (II) hysteresis and perpendicular ($\perp$) loops 136 and 138, shown in Figure 19 disclose a decrease in the demagnetising field, $H_d$, an increase in the $M_r/M_s$ ratio, and an increase in the $H_c$, as compared with an untreated Co film sample. However, the effect of this etching treatment is not as pronounced as the anodizing treatment of Example 2 for comparable times of treatment.

Example 4

As previously indicated, the treatments of Examples 1 through 4 are not limited to films produced by electroplating method described herein. These treatments may readily be applied to other magnetic films fabricated by other methods that provide the film with perpendicular anisotropy useful for perpendicular recording. In this Example, enhanced grain boundary diffusion is applied to a film having perpendicular anisotropy fabricated from a conventional sputtering process.

6

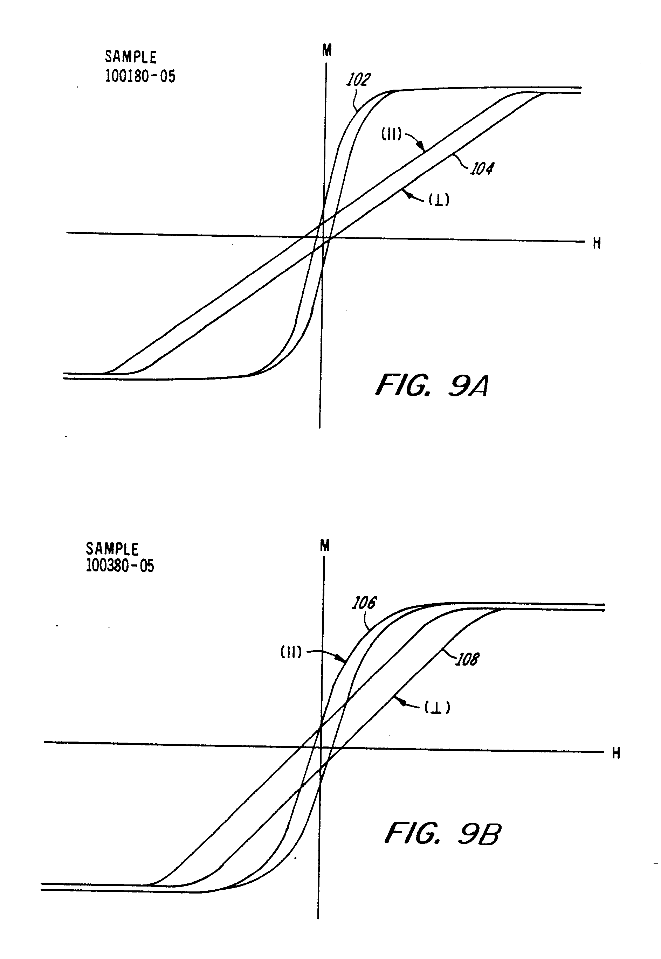

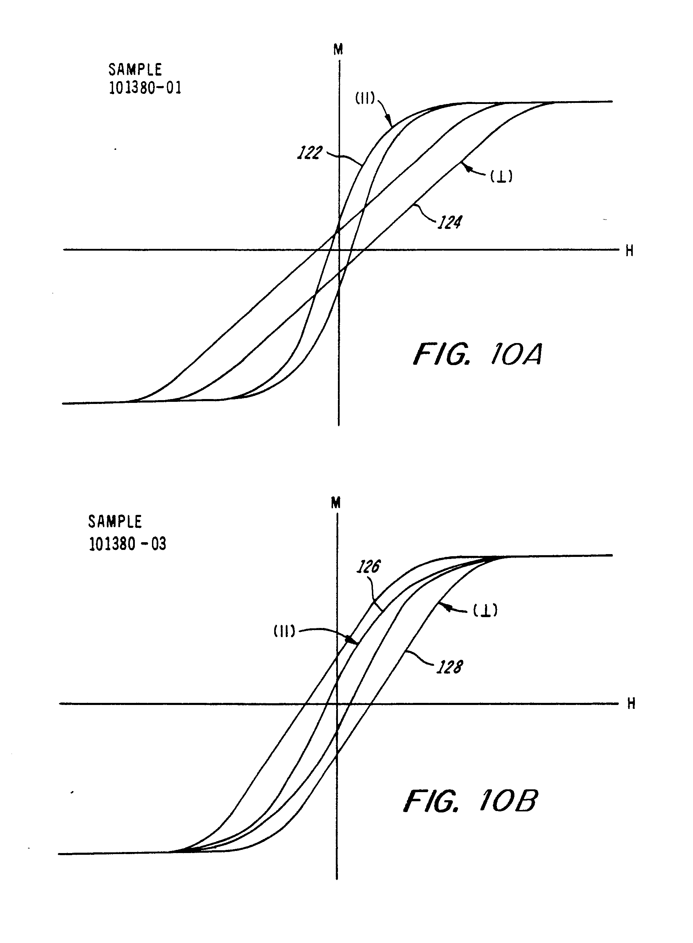

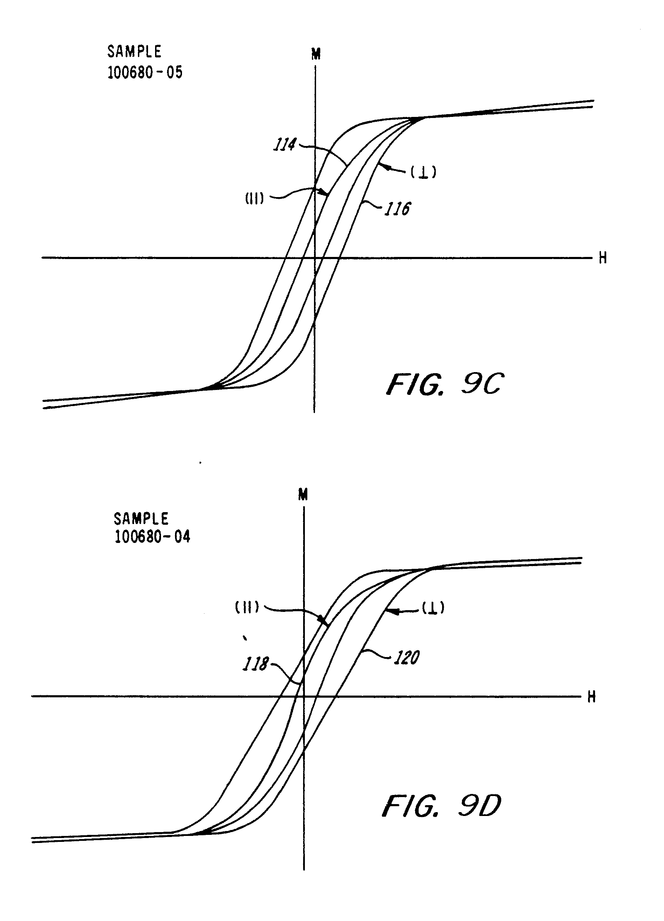

Sputtered Co—Re alloy films were produced with conventional sputtering equipment to have preferred orientation in crystallographic and crystallite shape similar to that of the electroplated films previously discussed. The method and conditions of obtaining the preferred oriented film is similar to the process described in the previous publication entitled "High Coercivity and High Hysteresis Loop Squareness of Sputtered Co—Re Thin Film" by Tu Chen and G B Charlan published in the *Journal of Applied Physics*, Volume 50, page 4285 et al., 1979. The sample produced for this example was sputtered from alloy target consisting of Co plus 10 atomic per cent Re. The sputtering was carried out under a 75 μm argon pressure. The film was deposited on the glass substrate at 100°C with deposition rate of 0.05 nm per second until a total film thickness of about 300 nm was achieved. The film as deposited showed perfect anisotropy with "c" axis of all crystallites in the film oriented normal to the film plane as revealed by the x-ray difraction method described in connection with Figures 9A and 9B. In these films, perpendicular anisotropy with accompanying reduction of the demagnetizing field is accomplished by reducing the magnetization of the film through alloying Co with Re. Therefore, for these as-deposited sputtered films, their demagnetising field $H_d$, and coercivity, $H_c$, cannot be improved beyond the limits of these properties now known to be obtained in conventional sputtered fabrication.

For perpendicular recording media application, a further decrease in demagnetising effect and increase in the $M_r/M_s$ ratio and $H_c$ is often required for low frequency recording. Therefore, to decrease the demagnetization field further and to increase the value of $M_r/M_s$ ratio and $H_c$ of the film from the as-sputtered state, the enhanced grain boundary diffusion treatment is applied to the previously sputtered Co—Re film samples to increase the magnetic separation between the crystallites and thereby decrease the $H_d$ and increase the $M_r/M_s$ ratio and the $H_c$. Specifically in this example, a sputtered film designated as Co—Re 121478-01 was heat treated in an ambient atmosphere in a furnace at 300°C for 18 hours to enhance the grain boundary diffusion by oxidation.

The results of the magnetic hysteresis measurements for the perpendicular ($\perp$) and parallel (II) hysteresis loops for the as-deposited and oxidation annealing are shown, respectively, in Figures 20A and 20B. By comparing the relative inclinations of parallel (II) loops 142 and 146 respectively for untreated and treated films with the inclinations of perpendicular ($\perp$) loops 144 and 148 respectively for untreated and treated films, it can be seen that the treated film shows a decrease in demagnetising field, as indicated by decreases in inclination of the perpendicular ($\perp$) loop 148 compared with the parallel loop 146. This hereby decreases the $H_d$ and increases the $M_r/M_s$ ratio and the $H_c$. Specifically in this example, a sputtered film designated as Co—Re 121478-01 was heat treated in an ambient atmosphere in a furnace at 300°C for 18 hours to enhance the grain boundary diffusion by oxidation. This illustrates that the enhanced grain boundary diffusion principle can also be applied also to sputtered films having perpendicular anistropy.

Magnetic materials and alloys other than Co or Co alloys, may be used.

**Claims**

1. A method of treating a continuous thin magnetic film (14) deposited on a substrate (12) the film comprising acicular shaped crystalline magnetic particles having crystallographic "c" axis (18) of each particle oriented parallel to the longitudinal axis of the acicle and the longitudinal axis of the acicles oriented substantially normal to the plane of the film, the treatment effectively increasing the separation between magnetic particles, thereby increasing their coercivity while decreasing the demagnetising field of the film, by providing enhanced grain boundary reaction at the intergranular boundary of said particles by either diffusing the magnetic layer with a reagent or etching the magnetic layer with an etching agent.

2. The method of claim 1, wherein the step of providing enhanced grain boundary reaction consists of electrochemical charging by cathodic action a solution containing a reagent, and immersing the magnetic layer in said solution thereby causing diffusion of the reagent into the outer portions of said acicular particles comprising the magnetic layer.

3. The method of claim 2, wherein the reagent is hydrogen, oxygen or nitrogen generated from cathodic action of the solution.

4. The method of claim 1, wherein the step of providing enhanced grain boundary reaction consists of heating the magnetic layer in the presence of an oxidizing environment, thereby causing diffusion of oxygen into the outer portions of the acicular particles comprising the magnetic layer.

5. The method of claim 1, wherein the step of providing enhanced grain boundary reaction consists of heating the magnetic layer in the presence of the vapor phase of an element that is dissimilar to the material comprising the acicular particles, thereby causing diffusion of the element into the outer portions of the acicular particles to form a nonmagnetic layer surrounding an inner magnetic core.

6. The method of claim 1, wherein the step of providing enhanced grain boundary reaction consists of immersing the magnetic layer in a solution of an etching agent thereby causing removal of an outer portion of the acicular particles comprising the magnetic layer.

7. The method of claim 1, wherein the step of providing enhanced grain boundary reaction consists of electrochemical etching by anodic action with a solution containing an etching agent and immersing the magnetic layer in the solution thereby causing removal of an outer portion of the acicular particles comprising the magnetic layer.

8. A magnetic recording medium treated as claimed in any preceding claim, wherein the magnetic layer comprises acicles of magnetic cobalt or an alloy thereof.

**Patentansprüche**

1. Verfahren zur Behandlung einer durchgehenden, dünnen, magnetischen Schicht (14), die auf einem Substrat (12) aufgebracht ist und nadelförmige, kristalline, magnetische Teilchen aufweist, wobei die "c" Kristallachse (18) eines jeden Teilchens parallel zu der Längsachse der Nadel und die Längsachse der Nadeln im wesentlichen senkrecht zu der Ebene der Schicht ausgerichtet sind, und wobei die Behandlung wirkungsvoll die Trennung zwischen den magnetischen Teilchen erhöht, wodurch deren Koerzitivkraft erhöht wird, während des Entmagnetisierungsfeld der Schicht verringert wird, indem eine verstärkte Korngrenzreaktion an der Zwischenkorngrenze der Teilchen durch Eindiffundieren eines Reagenz in die magnetische Schicht oder durch Ätzen der magnetischen Schicht mit einem Ätzmittel geschaffen wird.

2. Verfahren nach Anspruch 1, bei dem der Schritt zum Schaffen einer erhöhten Korngrenzreaktion darin besteht, daß durch kathodische Wirkung eine ein Reagenz enthaltene Lösung elektrochemisch geladen wird und die magnetische Schicht in der Lösung untergetaucht wird, wodurch eine Diffusion des Reagenz in die äußeren Bereiche der nadelförmigen Teilchen bewirkt wird, die die magnetische Schicht umfassen.

3. Verfahren nach Anspruch 2, bei dem das Reagenz Wasserstoff, Sauerstoff oder Stickstoff ist, die durch die kathodische Wirkung von der Lösung erzeugt werden.

4. Verfahren nach Anspruch 1, bei dem der Schricht, eine erhöhte Korngrenzreaktion zu schaffen, darin besteht, die magnetische Schicht in Gegenwart einer oxydierenden Umgebung zu erwärmen, wodurch eine Diffusion von Sauerstoff in die äußeren Bereiche der die magnetische Schicht umfassenden, nadelförmigen Teilchen bewirkt wird.

5. Verfharen nach Anspruch 1, bei dem der Schritt, eine erhöhte Korngrenzreaktion zu schaffen, darin besteht, die magnetische Schicht in Gegenwart der Dampfphase eines Elements zu erwärmen, das von dem die nadelförmigen Teilchen umfassenden Material verschieden ist, wodurch die Diffusion des Elements in die äußeren Bereiche der nadelförmigen Teilchen gebildet wird, um eine den inneren, magnetischen Kern umgebende, nichtmagnetische Schicht zu bilden.

6. Verfahren nach Anspruch 1, bei dem der Schritt, eine erhöhte Korngrenzreaktion zu schaffen, darin besteht, die magnetische Schicht in eine Ätzmittellösung einzutauchen, wodurch das Entfernen eines äußeren Bereiches der die magnetische Schicht umfassenden, nadelförmigen Telichen hervorgerufen wird.

7. Verfahren nach Anspruch 1, bei dem der Schritt, eine erhöhte Korngrenzreaktion zu schaffen, darin besteht, durch anodische Wirkung mit einer ein Ätzmittel enthaltenden Lösung elektrisch zu ätzen und die magnetische Schicht in die Lösung einzutauchen, wodurch das Enfernen eines äußeren Bereichs der die magnetische Schicht umfassenden, nadelförmigen Teilchen hervorgerufen wird.

8. Magnetisches Aufzeichnungsmedium, welches entsprechend einem der vorhergehenden Ansprüche behandelt worden ist, wobei die magnetische Schicht Nadeln aus magnetischem Kobalt oder einer Legierung davon umfaßt.

**Revendications**

1. Procédé de traitement d'une fine pellicule magnétique continue (14) déposée sur un substrat (12), la pellicule comprenant des particules magnétiques cristallines en forme d'aiguilles ayant l'axe cristallographique "c" (18) de chaque particule orienté parallèlement à l'axe longitudinal des aiguilles et l'axe longitudinal des aiguilles orienté sensiblement perpendiculairement au plan de la pellicule, le traitement augmentant effectivement la séparation entre les particules magnétiques, d'où l'augmentation de leur coercivité accompagnée de la diminution du champ de désaimantation de la pellicule, en fournissant une réaction renforcée de la frontière des grains à la frontière intergranulaire des particules soit par diffusion de la couche magnétique avec un réactif soit par attaque de la couche magnétique avec un agent d'attaque.

2. Procédé selon la revendication 1, dans lequel l'étape consistant à fournir une réaction renforcée de la frontière des grains consiste à charger électrochimiquement par action cathodique une solution contenant un réactif, et à immerger la couche magnétique dans la solution, d'où la diffusion du réactif dont les parties extérieures des particules en forme d'aiguilles constituant la couche magnétique.

3. Procédé selon la revendication 2, dans lequel le réactif est l'hydrogène, l'oxygène ou l'azote produits par l'action cathodique de la solution.

4. Procédé selon la revendication 1, dans lequel l'étape consistant à fournir une réaction renforcée de la frontière des grains consiste à chauffer la couche magnétique en présence d'un environment oxydant, d'où la diffusion de l'oxygène dans les parties extérieures des particules en forme d'aiguilles constituant la couche magnétique.

5. Procédé selon la revendication 1, caractérisé en ce que l'étape consistant à fournir une réaction renforcée de la frontière des grains consiste à chauffer la couche magnétique en présence de la phase vapeur d'un élément qui est différent du matériau constituant les particules en forme d'aiguilles, d'où la diffusion de l'élément dans les parties extérieures des particules en forme d'aiguilles pour former une couche amagnétique entourant un noyau magnétique intérieur.

6. Procédé selon la revendication 1, dans lequel l'étape consistant à fournir une réaction renforcée de la frontière des grains consiste à immerger la couche magnétique dans une solution d'un agent d'attaque, d'où l'enlèvement d'une partie extérieure des particules en forme d'aiguilles constituant la couche magnétique.

7. Procédé selon la revendication 1, dans lequel l'étape consistant à fournir une réaction renforcée de la frontière des grains consiste à attaquer électrochimiquement par action anodique avec une solution contenant un agent d'attaque et à immerger la couche magnétique dans la solution, d'où l'enlèvement de la partie extérieure des particules en forme d'aiguilles constituant la couche magnétique.

8. Support d'enregistrement magnétique traité selon l'une quelconque des revendications précédentes, dans lequel la couche magnétique comprend des aiguilles de cobalt magnétique ou d'un des ses alliages.

FIG. 1

FIG. 2

1

INTRINSIC (II) M-H LOOP

EXPERIMENTAL (⊥) M-H LOOP

M

H

28

30

FIG. 3

32

(II)

34

(⊥)

FIG. 4A

2

*FIG. 4B*

CONDUCTIVE SUPPORT

$Co(OH)^+ = Co^{++} + OH^-$

CATHODE

Co METAL ANODE

Co DEPOSIT

$Co^{++}$ SALT SOLUTION

*FIG. 5*

FIG. 6

**FIG. 7**

**FIG. 8**

SAMPLE
100180-05

FIG. 9A

SAMPLE
100380-05

FIG. 9B

SAMPLE
101380-01

(II)

*122*

(⊥)

*124*

*FIG. 10A*

SAMPLE
101380 - 03

*126*

(II)

(⊥)

*128*

*FIG. 10B*

SAMPLE
100680-05

M

114

(⊥)

(II)

116

H

*FIG. 9C*

SAMPLE
100680-04

M

(II)

(⊥)

118

120

H

*FIG. 9D*

SAMPLE
101380-02

FIG. 10C

SAMPLE
101480-05

FIG. 11

SAMPLE
121478-01

UNTREATED
SPUTTERED FILM

*FIG. 12A*

SAMPLE
121478-01

TREATED SPUTTERED
FILM

*FIG. 12B*